# EUROPEAN PATENT APPLICATION

(11) **EP 1 158 433 A2**
(43) Date of publication of application: **28.11.2001**
(21) Application number: 00123486.3
(22) Date of filing: 07.11.2000
(51) Int. Cl.: G06F 17/60

(54) **Online payment system and merchandizing center**

(30) Priority: 17.05.2000 JP 2000145048
(71) Applicant: Shigeyoshi, Takaoka, Nagaokakyo-shi, Kyoto-fu (JP); Techno Alliance Corporation, Tokyo (JP); Yamato Electronics International Corporation, Tokyo (JP); Sadao, Iwamoto, Neyagawa-shi, Osaka-fu (JP)
(72) Inventor: Shigeyoshi, Takaoka, Nagaokakyo-shi, Kyoto-fu (JP); Techno Alliance Corporation, Tokyo (JP); Yamato Electronics International Corporation, Tokyo (JP); Sadao, Iwamoto, Neyagawa-shi, Osaka-fu (JP)
(74) Representative: Hartz, Nikolai F., Dr.

(57) **Abstract**

An online payment system enabling online payment over a network. When a purchaser selects payment for the purchase price of the goods provided on a Web page of a content provider (CP) using the online payment system, a purchaser's terminal is disconnected from the Internet and automatically connected with a Computer Telephony Integration (CTI) center through a line capable of notifying the caller's telephone number using a toll-free telephone service. The CP notifies the CTI center of a telephone number input by the purchaser and the purchase price of the goods. The CTI center 13 judges whether the notified telephone number and the telephone number sent from the CP are the same. If these telephone numbers are the same, the CP completes payment according to data for the purchaser in a financial institution.

## Description

### BACKGROUND OF THE INVENTION

### Field of the Invention

The present invention relates to an online payment system and a merchandizing center used for online payment during shopping through a network (e.g., the Internet). Particularly, the present invention relates to an online payment system and a merchandizing center facilitating payment.

### Description of Background Art

Known systems exist for enabling online shopping over a network (e.g., the Internet). When performing such online shopping, customers order an item from a content provider (hereinafter "CP") through a connection to a wide area network (e.g., using dial-up connection from a home telephone, cellular phone, personal computer, or the like) . When a purchaser clicks a purchase button on a Web page downloaded from the CP to order an item, the CP sends a Web page that requests information (e.g., a shipping address, payment method, or the like) used to complete the order.

However, payment in conventional online shopping has been subject to at least four problems. First, customers hesitate to use known systems due to security concerns about inputting a credit card number during payment. Secondly, although a Web site employing a membership system or the like requires inputting personal information only once, the customer still has to go through the respective process of joining each desired provider as a member. Thirdly, when using an Information Fee Collection Service (e.g., Dial Q2), the customer may pay an expensive charge for the service without knowing it. Lastly, when using a prepaid method, the customer has to charge electronic money each time he pays, which is troublesome.

### SUMMARY OF THE INVENTION

Accordingly, an object of the present invention is to address the above-cited problems and provide an online payment system and a merchandizing center facilitating payment during online shopping.

An online payment system according to the present invention includes (1) a terminal (e.g., a personal computer, cellular phone, Personal Digital Assistant (PDA), or the like) connected to a network, (2) a merchandizing station for selling a product over a network, and (3) a control station (e.g., a financial institution) for managing online payment for the product. The terminal connected to the network through a first line inputs a telephone number used for a connection with the network when ordering a product from the merchandizing station. The control station allows the terminal to be disconnected from the network through the first line when taking an order for a product from the terminal, and to be automatically connectted with the control station through a second line (e.g., a toll-free telephone service). The second line is capable of notifying the control station of the telephone number of the terminal. The control station (e.g., financial institution) compares the telephone number input by the purchaser with the notified telephone number, and judges whether to allow payment of the purchase price for the product according to the results of the comparison.

When ordering a product from the terminal over the network, a purchaser input his telephone number via the terminal, whereupon the terminal is automatically connected to the control station through a line capable of notifying the control station of the telephone number of the terminal. The control station compares the input telephone number with the notified telephone number. Since payment of the purchase price is completed only in the case where the input telephone number and the notified telephone number are the same, secure authentication of the purchaser can be ensured. Therefore, a system facilitating online shopping and payment over a network can be provided.

According to one embodiment of the present invention, the control station is a Computer Telephony Integration (CTI) center. The telephone number of the purchaser who has ordered a product is displayed on a number display of the CTI center, and payment is completed in the financial institution according to this telephone number.

Preferably, when ordering a product, the terminal selects a financial institution acting as a control station to use for payment. The financial institution may access the account of the purchaser using a predetermined password to complete payment from the terminal. Since the purchaser's account is accessed in cooperation with the financial institute, the purchaser does not have to input sensitive personal information through the network. Therefore, payment can be directly achieved in the financial institution instead of the content provider(CP).

According to another aspect of the present invention, a merchandizing center connected with a terminal through a network using a telephone line prompts a purchaser for the telephone number when the purchaser orders a product from the terminal, and allows the terminal to be disconnected from the network and automatically connected with the merchandizing center through a telephone line differing from the telephone line used when the purchaser input his telephone number. The telephone line is capable of notifying the merchandizing center of the caller' s telephone number. The merchandizing center judges whether the notified caller's telephone number and the telephone number input by the purchaser are the same, and accepts the order in the case where the above telephone numbers are judged to be the same.

According to the present invention, the purchaser does not have to send sensitive personal information through a network. Moreover, the purchaser feels secure because an Information Fee Collection Service (e.g., Dial Q2) is not used. The purchaser does not have to register as a member and the purchaser only has to click once on a Web page downloaded from the CP. Even if the telephone number or password has leaked out, it is impossible to pretend to be the purchaser by utilizing a number display.

### BRIEF DESCRIPTION OF THE DRAWINGS

A more complete appreciation of the invention and many of the attendant advantages thereof will become readily apparent to those skilled in the art with reference to the following detailed description, particularly when considered in conjuction with the accompanying drawings, in which:
Figure 1 is a schematic block diagram of an online payment system according to an embodiment of the present invention;
Figure 2 is a flowchart showing the process of the online payment system;
Figure 3 is schematic block diagram of a modification example of changing telephone lines in the online payment system;
Figure 4 is a schematic block diagram of the online payment system in a modification example relating to a CTI center;
Figures 5A-5E are exemplary display screens according to one embodiment of the present invention;
Figures 6A-6E are exemplary display screens according to one embodiment of the present invention;
Figures 7A-7E are exemplary display screens according to one embodiment of the present invention;

### DETAILED DESCRIPTION OF THE INVENTION AND PREFERRED EMBODIMENT

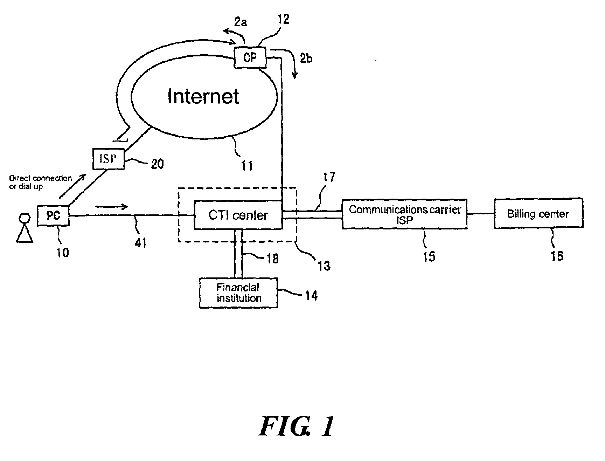

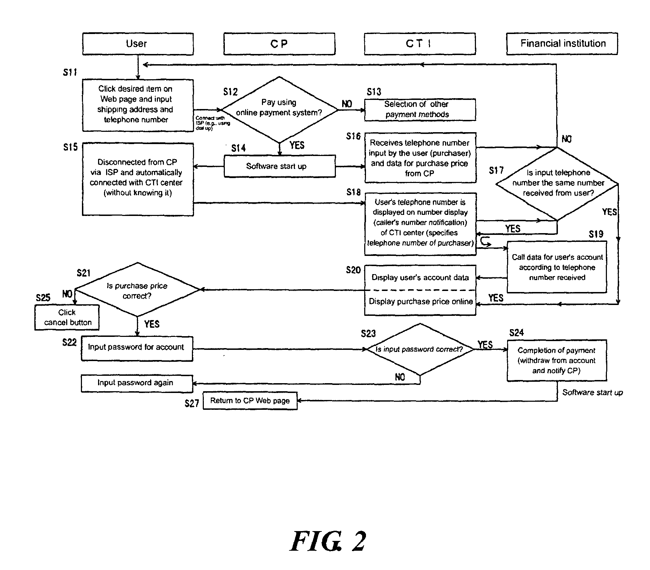

An embodiment of the present invention will be described with reference to drawings . Figure 1 is a schematic block diagram of an online payment system according to the present invention. Figure 2 is a flowchart showing the operation of the online payment system. Generally, as shown in Figure 1, in the online payment system, a purchaser accesses a network 11 (e.g., a wireless network, a cable network, a community antenna television (CATV) network, a two-way television network, the Internet or the like) using a terminal 10 (e.g., a personal computer (abbreviated as "PC" in the Figures), cellular phone, a personal digital assistant (PDA), a household electric appliance accessible to the Internet or the like) through an internet service provider 20 (hereinafter "ISP") (e.g., by using a public dial up connection.

As seen in the flowchart of Figure 2, a purchaser accesses a Web page 12 of a content provider (hereinafter "CP") or the like via the network 11(step S11) to shop for an item. The purchaser clicks a desired item on the Web page displayed on the terminal 10, and inputs a shipping address, the purchaser's telephone number, or the like. Then, a Web page confirming to the purchaser whether to pay using a predetermined online payment system is displayed. If the purchaser does not select payment using an online payment system ("NO" in step S12), the purchaser can select other payment methods (step S13).

If the purchaser selects payment using the online payment system ("YES" in step S12), the online payment system starts up (step 14). When the online payment system starts up, the terminal 10 is disconnected from the CP and a new connection 2a (Fig. 1) is automatically made with a Computer Telephony Integration center 13 (hereinafter "CTI center") . The terminal 10 may be connected with the CTI center (e.g., through a telephone line 41 using a toll-free telephone service through a wireless network, cable network, CATV, two-way television, or the like.

When the online payment system starts up, the CTI center 13 receives the telephone number input by the purchaser and the purchase price sent from the CP (step S16), as indicated by 2b in Figure 1.

The CTI center 13 is connected with a financial institution 14 through a private line 18 corresponding to each payment method. The financial institution 14 checks whether the telephone number input by the purchaser is the same telephone number received from the terminal 10 (step S17). If the telephone number input by the purchaser is the same telephone number received from the terminal 10 ("YES" in step S17), the financial institution 14 notifies the CTI center 13 of that. The CTI center 13 then displays the price of the purchase online (step S20). At the same time, the purchaser's telephone number is displayed on a number display of the CTI center 13 to specify the purchaser's telephone number (step S18). The financial institution 14 accesses data for the purchaser's account according to the received telephone number (step S19).

The purchaser checks whether the purchase price displayed on the display of the terminal 10 is correct (step S21). If the purchaser confirms that the purchase price is correct ("YES" in step S21), the purchaser enters a code number for the purchaser's account (step S22). In response to entering the code number, the CTI center 13 checks whether the code number is correct (step S23). If the code number is correct ("YES" in step S23), the financial institution 14 completes payment (step S24). Specifically, payment is directly withdrawn from the purchaser's account, and the financial institution 14 notifies the CP of the completion of the payment. If the purchase price is incorrect ("NO" in step S23), the purchaser clicks a cancel button (step S25).

If the code number is incorrect in step S23 ("NO" in step S23), the CTI center requests the purchaser to enter a correct code number (step S25).

When payment is completed in step S24, the Web page of the CP is displayed on the screen of the terminal 10 (step S27).

The above embodiment is described taking the financial institution 14 as an example of a payment institution. The amount due may be added to the charge for the communications carrier or ISP 15 used for connecting with the network in a billing center 16.

Next, a method of disconnecting the terminal 10 from the CP and connecting the terminal 10 to the CTI center 13 will be described.

If the purchaser selects payment using the online payment system through the Internet 11, software which allows the terminal 10 to be disconnected from the Internet 11 and automatically connected with the CTI center 13 is downloaded to the terminal 10. Upon executing the above software, the terminal 10 is automatically connected with the CTI center 13.

Software which allows the terminal 10 to be automatically connected again with the Internet 11 is also downloaded to the terminal 10, in case a connection with the CTI center 13 is unexpectedly disconnected for some reasons or payment with the CTI center 13 is completed.

The above two types of software may be previously installed in the terminal 10 from a CD-ROM, floppy disk, or the like. If the above software has been already downloaded to or installed in the terminal 10, the CP may send a digital signal (e.g., a packet) to the terminal 10 for executing the installed software, thereby allowing the terminal 10 to be disconnected from the Internet 11 and automatically connected with the CTI center 13. This prevents the above software from being downloaded each time the purchaser clicks a purchase button through the Internet.

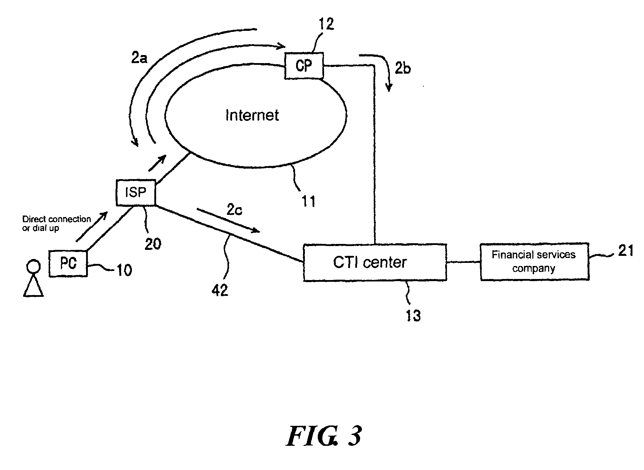

A modification example of the method of disconnecting the terminal 10 from the CP and connecting the terminal 10 to the CTI center 13 will be described below with reference to Figure 3. This modification example differs from the above embodiment in that the terminal 10 is not directly connected with the CTI center 13, and the purchaser's telephone number is forwarded from the ISP 20 to the CTI center 13 through a private line 42 (indicated by 2c in the Figure).

Specifically, in this modification example, system software which allows the ISP 20 to be disconnected from the Internet and to forward the purchaser's telephone number used for dial-up connection with the ISP 20 to the CTI center 13 is included in the ISP 20 in advance. When the purchaser clicks a purchase button for a desired item on the Web page 12 of the CP in Figure 2 (step S11), the CP sends a digital signal (e.g., a packet) to the ISP 20. Upon receiving the signal, the ISP 20 executes the above system software to forward the purchaser' s telephone number used for dial-up connection with the ISP 20 to the CTI center 13. The CTI center 13 receives the purchaser's telephone number forwarded from the ISP 20. Since the succeeding process is the same as in the basic system configuration shown in Figure 2, the same parts are indicated by the same symbols as in Figure 2 and further description will be omitted.

A further modification example of the method of disconnecting the terminal 10 from the CP and connecting the terminal 10 with the CTI center 13 will be described below. This modification example is a payment method for ordering digital contents using an electronic key.

Specifically, when the purchaser clicks a button to download the digital contents on the Web page 12, the digital contents are encrypted using an electronic key and downloaded to the terminal 10. The purchaser cannot decrypt the encrypted digital contents.

When the purchaser clicks a purchase (payment) button for the digital contents, the terminal 10 is disconnected from the Internet 11 and automatically connected with the CTI center 13 in the same manner as in the above basic system configuration. The succeeding process is the same as the basic system configuration. When payment is completed, an electronic key for decrypting the encrypted digital contents is downloaded to the terminal 10. The purchaser decrypts the encrypted digital contents using the downloaded electronic key.

In this embodiment, digital contents are downloaded to the terminal 10 in an encrypted state and decrypted using an electronic key after the completion of payment. The digital contents may be downloaded to the terminal 10 after receiving a notification advising the completion of payment from the financial institution 14. This eliminates the need for encryption.

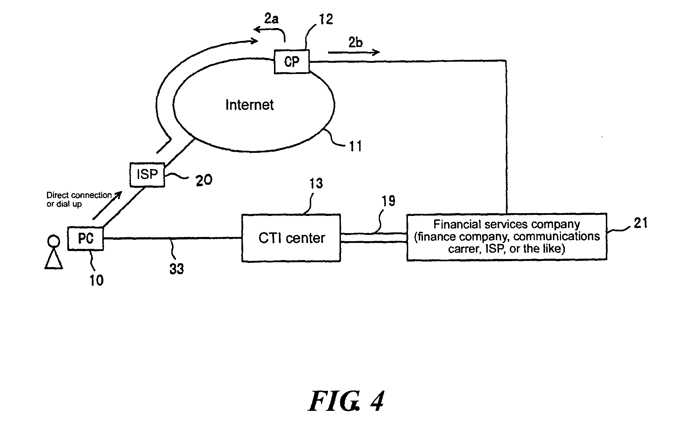

Next, another embodiment relating to the CTI center of the online payment system according to the present invention will be described. Figure 4 is a schematic block diagram of the online payment system according to another embodiment of the present invention. The difference between the present embodiment and the above embodiments is that the CP sends data to the financial services company 21 through a route 2b in Figure 4, and the financial services company 21 carries out purchaser authentication and payment as shown in Figure 4. The CP also may send data to the CTI center 13 and the financial services company 21 through the route 2b such that each of the CTI center 13 and the financial services company 21 may perform either purchaser authentication or payment.

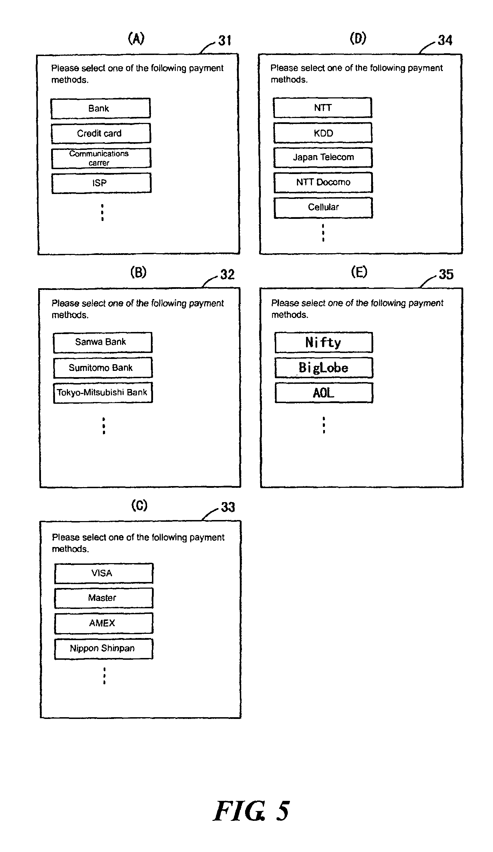

Next, examples of a display screen of the terminal 10 will be described below. Figures 5A-5E illustrate exemplary display screens of the terminal 10.

Figure 5A shows an example of a display screen 31 which allows the selection of the payment method shown in step S11. In Figure 5A, the purchaser selects one among several financial institutions and financial services companies including "Bank", "Credit card", "Communications carrier", "ISP (Internet Service Provider)", and the like. This screen is displayed on a cellular phone or the like in the same manner as the PC.

Figure 5B shows an example of a display screen 32 which is displayed when "Bank" is selected on the display screen 31. The names of a plurality of banks are displayed as shown in Figure 5B, and the purchaser selects a desired bank to be used for payment. The display screen 32 includes a message "Payment will be directly withdrawn from your bank account".

Figure 5C shows an example of a display screen 33 which is displayed when "Credit card" is selected on the display screen 31. The names of a plurality of credit card companies are displayed as shown therein. The display screen 33 includes a message "The amount due will be added to the bill from the credit card company".

Figure 5D shows an example of a display screen 34 in the case of selecting a "Communications carrier" on the display screen 31. The display screen 34 includes a message "The amount due will be added to the monthly charge for the communications carrier".

Figure 5E shows an example of a display screen 35 in the case of selecting "ISP" on the display screen 31. The names of a plurality of ISPs are displayed as shown therein. The display screen 35 includes a message "The amount due will be added to the monthly charge for the ISP". The purchaser selects one of the ISPs displayed on the screen.

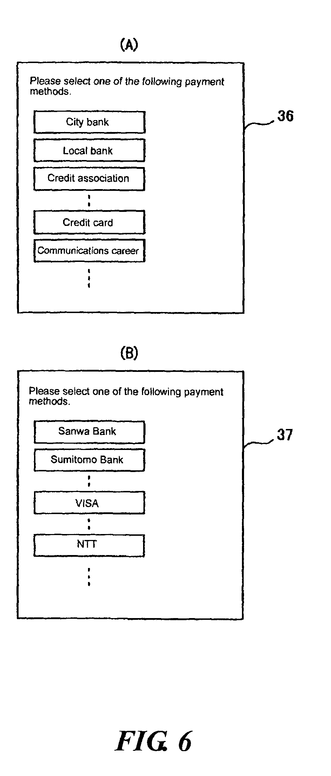

The display screen is not limited to the above examples. For example, "City bank", "Local bank, "Credit association", ···, "Credit card", "Communications carrier", or the like may be listed in a row as shown in a display screen 36 in Figure 6A. Furthermore, specific names of the financial institutions or companies included in the different categories shown in the screen 36 may be listed in a row as shown in a display screen 37 in Figure 6B.

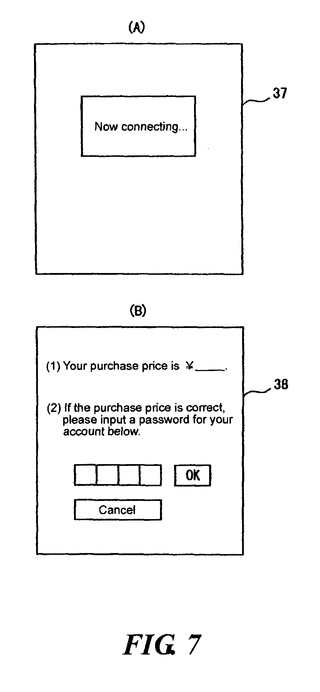

Figure 7A shows an example of a display screen 37 displayed when the terminal 10 is disconnected from the CP 12 and then automatically connected with the CTI center 13. A message "Now connecting" is displayed on the screen as shown therein. Figure 7B shows an example of a display screen 38 for allowing the purchaser to confirm the purchase price and to enter a code number. The total purchase price of the goods that the purchaser shops online from the CP is displayed to allow the purchaser to confirm the total purchase price. If the total purchase price is correct, the purchaser inputs a code number for the financial services company selected on the display screen 38 and clicks "OK" on the screen. If the total purchase price is incorrect or the purchaser has changed his mind, the purchaser clicks "Cancel".

The display screen for allowing the purchaser to confirm the purchase price and to enter the code number is not limited to the display screen 38. The name of the financial services company selected by the purchaser may be displayed. The field for inputting a code number may be omitted depending on the selected financial services company. Moreover, the account name, branch name, or the like may be included in addition to the field for inputting a code number.

The terminal 10 used by the purchaser may be specified using the IP address or the like.

The above embodiments should not be construed as limiting the present invention. Obviously, numerous modifications and variations of the present invention are possible in light of the above teachings. It is therefore to be understood that, within the scope of the appended claims and the meaning and scope of equivalence, the invention may be practiced otherwise than as specifically described herein.

## Claims

1. An online payment system comprising:
a terminal connected to a network through a first line by inputting a telephone number when ordering a product from a merchandizing station; and
a control station for disconnecting the terminal from the network through the first line when taking an order for a product from the terminal, and automatically connected with the control station through a second line;
the second line is capable of notifying the control station of the telephone number of the terminal; and
the control station comprises a means for comparing the telephone number input by the purchaser with the notified telephone number, and a means for judging whether to allow payment of the purchase price for the product according to the results determined by the comparing means.

2. The online payment system according to claim 1, wherein the control station comprises a financial institution.

3. The online payment system according to claim 1, wherein the control station comprises a Computer Telephony Integration (CTI) center.

4. The online payment system according to claim 2 , wherein the terminal further comprises means for selecting a financial institution used for payment when ordering a product, and the financial institution is the selected financial institution.

5. The online payment system according to claim 2, wherein the terminal further comprises an interface for selecting a financial institution used for payment when ordering a product, and the financial institution is the selected financial institution.

6. A merchandizing center connected with a terminal through a network using a telephone line capable of notifying the merchandizing center of the caller's telephone number comprising:
means for prompting a purchaser for a first telephone number when the purchaser orders a product from the terminal; and
means for allowing the terminal to be disconnected from the network and automatically connected with the merchandizing center through a telephone line differing from the telephone line used when the purchaser input his telephone number;
means for judging whether the notified caller's telephone number and the telephone number input by the purchaser are the same; and
means for accepting the order when the judging means has judged that the above telephone numbers are the same.

7. A computer program product, comprising:
a computer storage medium and a computer program code mechanism embedded in the computer storage medium for facilitating an online purchase, with a merchandizing center, via a terminal through a network using a telephone line capable of notifying the merchandizing center of the callers telephone number, the computer program code mechanism comprising:
a first computer code configured to prompt a purchaser for a first telephone number when the purchaser orders a product from the terminal;
a second computer code configured to allow the terminal to be disconnected with the the merchandizing center through a telephone line differing from the telephone line used when the purchaser input his telephone number;
a third computer code configured to judge whether the notified caller's telephone number and the telephone number input by the purchaser are the same; and
a fourth computer code configured to accept the order when the judging means has judged that the above telephone numbers are the same.
